(19) Europäisches Patentamt
European Patent Office
Office européen des brevets

(11) EP 3 140 836 B1

(12) EUROPEAN PATENT SPECIFICATION

(45) Date of publication and mention of the grant of the patent:
01.01.2020 Bulletin 2020/01

(51) Int Cl.:
H01B 7/04 (2006.01)        H02G 3/04 (2006.01)
H01B 9/00 (2006.01)        H01B 7/30 (2006.01)
H02G 9/02 (2006.01)

(21) Application number: 15770962.7

(22) Date of filing: 30.04.2015

(86) International application number:
PCT/IB2015/000855

(87) International publication number:
WO 2015/170173 (12.11.2015 Gazette 2015/45)

(54) **SUBSEA POWER UMBILICAL**

UNTERMEERESLEISTUNGSVERSORGUNGSLEITUNG

OMBILICAL D'ÉNERGIE SOUS-MARIN

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 07.05.2014 US 201414272229

(43) Date of publication of application:
15.03.2017 Bulletin 2017/11

(73) Proprietor: Technip France
92400 Courbevoie (FR)

(72) Inventors:
• ZERKUS, James Michael
Seabrook, Texas 77586 (US)
• ROBSON, Dave
League City, Texas 77573 (US)
• ROBERTS, Stephanie
Houston, Texas 77077 (US)
• MOODY, Geoff
Katy, Texas 77494 (US)

(74) Representative: Murgitroyd & Company
Murgitroyd House
165-169 Scotland Street
Glasgow G5 8PL (GB)

(56) References cited:
WO-A1-2008/074104        DE-A1- 10 301 530
DE-C- 669 122        GB-A- 2 462 130
JP-A- S55 139 718

## Description

The present invention relates to a subsea power umbilical, in particular one that is used in an offshore application such as oil and gas field developments, subsea pumping, processing and renewable energy installations.

## Background to the Invention

An umbilical consists of a group of one or more types of elongated active umbilical elements, such as electrical cables, optical fiber cables, steel pipes and/or hoses, cabled together for flexibility, over-sheathed and, when applicable, armored for mechanical strength.

Umbilicals are typically used for transmitting power, signals and fluids (for example for fluid injection, hydraulic power, gas release, etc.) to and from a subsea installation.

A three-phase current cable comprising two conductors connected in parallel is described in DE 669 122 C. However, this is not a subsea power umbilical. In addition, the power cables are not rated at voltages between 1kV and 200 kV, are not bundled together in a triplex formation for power distribution to form a power cable triad and are not connected in at least one termination of the umbilical.

The umbilical cross-section is generally circular. The elongated elements of the umbilical are wound together either in a helical or in a S/Z pattern. In order to fill the interstitial voids between the various umbilical elements and obtain the desired configuration for the umbilical, filler components may be included within the voids. ISO 13628-5 / API (American Petroleum Institute) 17E "Specification for Subsea Umbilicals", provides standards for the design and manufacture of such umbilicals.

Subsea umbilicals are installed at increasing water depths, commonly deeper than 2000m. Such umbilicals have to be able to withstand severe loading conditions during their installation and their service life.

The main load bearing components in use for withstanding the axial loads due to the weight and to the movements of the umbilical are steel pipes (see US 6,472,614, WO93/17176 and GB2316990), steel rods (see US 6,472,614), composite rods (see WO2005/124213), tensile armor layers (see Figure 1 of US 6,472,614), or steel wire ropes.

The other elements of the umbilical, i.e. the electrical and optical cables, the thermoplastic hoses, the polymeric external sheath and the polymeric filler components etc., do not contribute significantly to the tensile strength of the umbilical.

Electrical cables used in subsea umbilicals fall into two distinct categories respectively known as power cables and signal cables.

Power cables are used for transmitting high electrical power (typically a few MW) to powerful subsea equipment such as pumps. Power cables are rated at voltages comprised between 1 kV and 200 kV, and generally between 6kV and 35kV (medium voltage range).

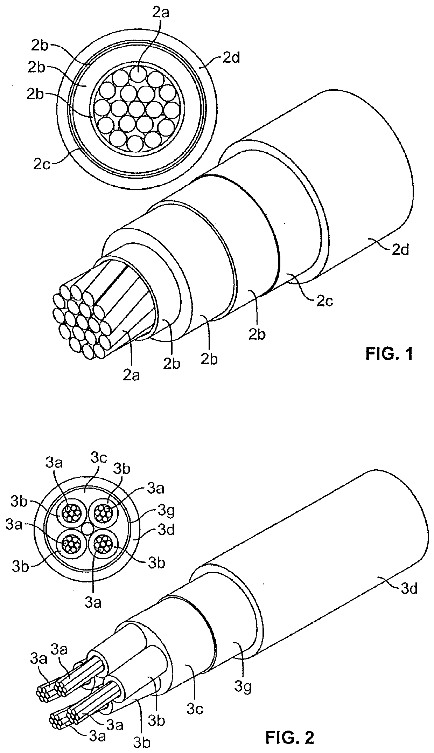

A typical power cable is illustrated in Figure 1. From inside outside, it comprises a central copper conductor 2a, semi-conductor and electrical insulation layers 2b, a metallic foil screen 2c and an external polymeric sheath 2d.

The central conductor 2a has generally a stranded construction and a large section typically comprised between 50mm$^2$ and 400mm$^2$. Three phase AC power is provided by three such cables typically bundled together within the umbilical structure.

Signal cables are generally used for transmitting signals and low power (<1 kW) to electrical devices on the seabed. Signal cables are generally rated at a voltage smaller than 1000V.

Signal cables generally consist of small section insulated conductors bundled together as pairs (2), quads (4) or, very rarely, any other number, said bundle being further over-sheathed.

An example of quad signal cable is illustrated in Figure 2. Four small size stranded copper conductors 3a are individually over sheathed by polymeric insulation layers 3b and helically bundled together. A polymeric filler material 3c is added to fill the voids in the bundle and achieve a cylindrical shape. This arrangement is optionally surrounded by an electric field shielding 3g made from a wrapped copper or aluminium foil. A polymeric external sheath 3d protects the cable against mechanical damage and water ingress. These cables are sometimes filled with a water blocking compound that swells on contact with water so as to block water travelling along the cable if the outer jacket is breached.

An umbilical comprising at least one power cable is called a power umbilical. WO2005/124213 discloses an example of a power umbilical. The power umbilicals shown on the figures of WO2005/124213 comprise two independent 3-phase power supply circuits. Each 3-phase power supply circuit is defined by three power cables representing each phase of the power supply circuit. A subsea power umbilical is disclosed in GB 2462130.

There is an ever increasing drive to work at greater water depths, certainly beyond 1000 metres, and now commonly in excess of 2000 metres or even 3000 metres. As a result, there is a need in the oil & gas market to increase the length of the umbilicals and to also increase the amount of power to be transmitted to subsea equipment.

Increasing the length of the umbilical and the amount of power to be transmitted generally involves increasing the size of the copper conductors and hence the size of the power cables. However, this can result in umbilicals having a very large diameter and increased weight as a result

There is therefore a need to increase the current carrying capability of power cables (i.e. ampacity of the power cables) in an umbilical without increasing the cross-section of the conductors, as increasing the cross-section of the conductors would increase the weight, the dimensions and the cost of the umbilical.

## Summary of the Invention

According to the invention, a subsea power umbilical is provided as defined in claim 1. Further developments of the invention are the subject of the dependent claims.

The present invention facilitates the increase of the current carrying capability of the power cables without increasing the cross-section of the conductors.

The present invention also reduces the electrical power losses in a power umbilical, in particular umbilicals used to transmit 3-phase alternative currents.

The umbilical in accordance with the invention may further comprise a second independent 3-phase power supply circuit.

In exemplary embodiments having a second independent 3-phase power supply circuit, the second 3-phase power supply circuit may comprise at least six power cables wherein each phase of the second 3-phase power supply circuit consists of at least two power cables connected in parallel with each other.

In exemplary embodiments, the umbilical comprises three or more independent 3-phase power supply circuits. Each 3-phase independent power supply circuit may comprise at least six power cables wherein each phase of the 3-phase power supply circuit consists of at least two power cables connected in parallel with each other.

In exemplary embodiments, three of the at least six power cables are bundled together in triplex formation for power distribution to form a power cable triad. All of the power cables may be bundled together in triplex formation for power distribution to form power cable triads.

In exemplary embodiments wherein the power cables are bundled together in triplex formation to form a power cable triad, the umbilical may comprise at least three power cable triads defining the first independent 3-phase power supply circuit.

In exemplary embodiments comprising more than one independent 3-phase power supply circuit, one of or each independent 3-phase power supply circuit may comprise at least three power cable triads.

In exemplary embodiments wherein the power cables are bundled together in triplex formation to form a power cable triad, each triad may consist of 3 insulated power cables twisted together.

In exemplary embodiments having a plurality of power cable triads, the power cable triads may be symmetrically arranged within the umbilical. The power cable triads may be arranged symmetrically in the umbilical cross-section. For example, the power cable triads defining at least one independent 3-phase power supply circuit may be arranged at regular angular intervals along an imaginary circle centered on a main longitudinal axis of the umbilical. The power cable triads defining each independent 3-phase power supply circuit may be arranged at regular angular intervals along an imaginary circle centered on a main longitudinal axis of the umbilical.

In exemplary embodiments having two or more independent 3-phase power supply circuits, the first and second independent 3-phase power supply circuits may be arranged so as to define an outer circuit and an inner circuit within the umbilical. The outer circuit and the inner circuit may be contra-helically laid.

According to an aspect of the invention the power cables are connected in parallel in at least one termination of the umbilical. The power cables may be connected in parallel in both terminations of the umbilical.

According to an aspect of the invention, the umbilical is a subsea power umbilical.

## Brief Description of the Drawings

The invention will now be described by way of non-limiting example, with reference being made to the accompanying drawings, in which:

Figure 1 comprises cross-section and perspective views of a typical power cable;

Figure 2 comprises cross-section and perspective views of a typical signal cable;

Figures 3A and 3B are cross-section and schematic views showing the arrangement of the power cables in a first embodiment of an umbilical in accordance with the invention;

Figure 4 is a schematic view showing an alternative arrangement of the power cables in an umbilical in accordance with a first embodiment of the invention;

Figures 5a and 5b are cross-section and schematic views showing an arrangement of the power cables in a second embodiment of an umbilical in accordance with the invention;

Figures 6a and 6b are schematic views showing alternative arrangements of the power cables in an umbilical in accordance with a second embodiment of the invention;

Figure 7 is a cross-sectional view of an umbilical in accordance with a second embodiment of the invention showing an arrangement of the umbilical elements contained therein;

Figure 8 depicts a 3-phase power supply circuit diagram of the umbilical of figure 7 showing the connections of power cables in the circuit;

Figure 9 depicts a 3-phase power supply circuit diagram of the umbilical of figure 7 showing an alternative example not according to the invention of the connection of the power cables in the circuit;

Figures 10a and 10b are schematic views showing arrangements of the power cables in an umbilical in accordance with a third embodiment of the invention;

Figure 11 is a schematic view showing an arrangement of the power cables in an umbilical in accordance with a fourth embodiment of the invention;

Figure 12 is a cross-sectional view showing an arrangement of the power cables in an umbilical in accordance with a fifth embodiment of the invention;

Figure 13 is a cross-sectional view showing an alternative arrangement of the power cables in an umbilical in accordance with the fifth embodiment of the invention; and

Figure 14 depicts a 2-part 3-phase power supply circuit diagram of the umbilical in accordance with the fifth embodiment of the invention.

**Description of the Preferred Embodiments**

The preceding discussion of the background to the invention is intended only to facilitate an understanding of the present invention. It should be appreciated that the discussion is not an acknowledgement or admission that any of the material referred to was part of the common general knowledge as at the priority date of the application.

Throughout the description and claims of this specification, the words "comprise" and "contain" and variations of the words, for example "comprising" and "comprises", mean "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics, compounds described in conjunction with a particular aspect, embodiment or example of the invention are to be understood to be applicable to any other aspect, embodiment or example described herein unless incompatible therewith.

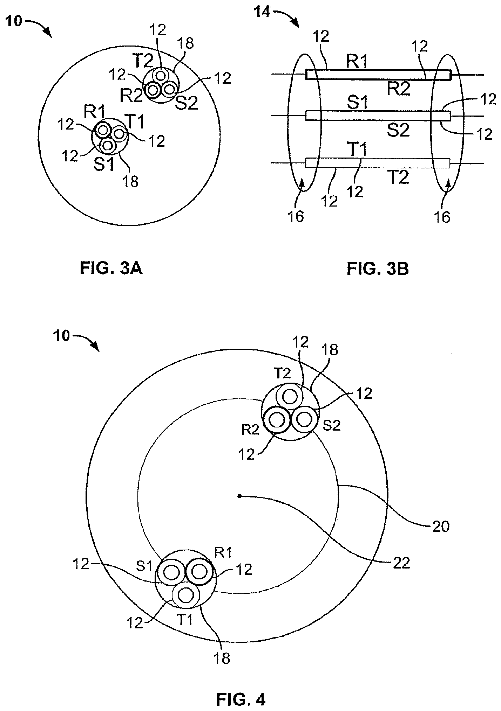

Referring to figure 3, a first embodiment of an umbilical **10** in accordance with the invention is shown depicting the arrangement of the power cables **12** therein. Only the power cables **12** are shown for clarity. The umbilical **10** is in the form of a subsea power umbilical.

The umbilical **10** comprises a first independent 3-phase power supply circuit **14** (see figure 3b). The power supply circuit **14** comprises at least six power cables **12** and each phase **R, S, T** of the 3-phase power supply circuit consists of at least two power cables **12** connected in parallel with each other.

In the embodiment shown, the 3-phase power supply circuit **14** comprises six power cables **12** with each phase **R**, **S**, **T** consisting of two power cables **12** connected in parallel with each other. The power cables **12** are connected in parallel within the terminations **16** of the umbilical **10**.

While the power cables **12** have been shown to be connected in parallel at both ends within the terminations **16** of the umbilical **10**, it is not essential for the power cables **12** to be connected within the terminations **16** of the umbilical **10**. For example, the power cables **12** may be connected in parallel in only one termination **16** of the umbilical 10.

In the arrangement shown, the power cables **12** are bundled together in triplex formation for power distribution to form power cable triads **18**. Such an arrangement reduces the reactive power losses. It also reduces the inductive couplings to other components of the umbilical.

As shown in figure 3a, with six power cables **12**, two power cable triads **18** are formed. The first power cable triad **18** comprises three phases **R1, S1, T1** and the second power cable triad **18** comprises three phases **R2, S2, T2.**

Each power cable triad **18** consists of three insulated power cables **12** twisted together.

While all six power cables **12** are depicted bundled together in triplex formation to form power cable triads, it would be understood that it is not essential for all or any of the power cables to be bundled together. None of the cables may be bundled together or just three of the six power cables may be bundled together in triplex formation for power distribution to form a power cable triad. However, the embodiments wherein all the power cables are bundled in triplex formation are preferred because they more efficiently reduce the reactive power losses.

Currently in known subsea umbilicals, a single triad is utilised for each 3-phase power supply circuit. Accordingly, an umbilical having two triads as shown in figure 3 would be used to drive 3-phase power supply to two independent equipment (i.e. submarine pumps, compressors, etc.) in known subsea umbilicals.

One of the losses which reduce the ampacity of the power cables is notably related to the "skin effect" which concentrates the currents close to the surface of the conductors of the power cables, thus reducing the current density in the central part of the conductors. This effect depends on the frequency of the alternative current. The higher the frequency, the smaller the depth of penetration of the currents within the conductor. When the operational frequency is larger than 200Hz (power supply of some submarine compressors) the skin effect significantly reduces the ampacity of the power cables.

When the umbilical comprises many power cables, their ampacity can also be reduced by the "proximity effect". The proximity effect in a conductor is caused by the magnetic field of neighbour cables and tends to "push" the current flow lines into a certain part of the conductor, thus also reducing the useful conductor cross-section.

An umbilical **10** in accordance with the invention avoids the use of large conductors and replaces them by several smaller individually insulated conductors connected in parallel. Indeed, due to the skin effect, the current flow line is concentrated close to the surface of the conductor. The thickness T of the surface layer where the current flow lines are concentrated can be estimated with the formula below:

$$T \approx \frac{1}{\sqrt{\pi \mu \sigma F}}$$

$\mu$ is the magnetic permeability of the conductor, $\sigma$ is the electrical conductivity of the conductor, and F is the frequency of the alternative current transported by the conductor.

For a copper conductor: $\mu = 4\pi\ 10^{-7}$ H/m and $\sigma = 5.95\ 10^{7}$ S/m

Therefore, for a copper conductor:

| Frequency F (Hz) | 50 | 60 | 100 | 200 |
|---|---|---|---|---|
| Thickness T (mm) | 9.2 | 8.4 | 6.5 | 4.6 |

The conductor cross-section is generally circular. Let us call R the radius of this circle.

If T is much small than R, then a large part of the cross section of the conductor is not used to transmit the current, which decreases the ampacity. T should ideally be equal or greater than R so that the whole cross-section is used for the current transmission.

If we assume that R should not be higher than T, then we can deduce the size of the ideal conductors:

| Frequency F (Hz) | 50 | 100 | 200 |
|---|---|---|---|
| Conductor radius R (mm) | 9.2 | 6.5 | 4.6 |
| Conductor section (mm²) | 265.9 | 132.7 | 66.5 |

Therefore, in order to reduce the losses, each conductor should have a section smaller than a maximum value which depends on the frequency.

For the most demanding applications (deep water, very long umbilical), the section of each conductor should be smaller than 70mm², preferably around 50 mm² (smallest power cables used in subsea umbilical, the whole section range extending from around 50mm² to around 400mm²).

The way the different conductors are bundled and positioned within the umbilical makes it possible to further reduce the losses. The bundling of the power cables in triads results in lower losses than if the power cables were not arranged in triads.

Indeed, a triad has the advantage of not generating an important magnetic field when it is used to transmit 3-phase AC currents. Indeed, the 3 magnetic field generated by the three cables of the triad almost compensate each other (sum of the 3 fields close to zero) because first the three conductors are very close to each other, and second the sum of the 3 currents transmitted by the three conductors is equal to zero at any point in time(property of 3-phase currents).

In addition, the proximity effect from adjacent groups of conductors is reduced when these groups are arranged in triads. This advantage also reduces the interferences both between power circuits and between power and signal cables. This can be a major issue in long umbilical containing multiple power circuits, each operating at different frequencies between 25Hz and 200Hz.

The insulation level of the individual power conductors, the spacing between the power conductors within the triads and the number of triads in parallel are all specifically chosen to achieve a specific electrical impedance of the overall power path.

According to a preferred embodiment, the power cable triads **18** used to form an independent 3-phase power supply circuit are identical to each other, which means that the power cables **12** connected in parallel are also identical to each other. The impedances of the three parallel circuits are thus almost equal, which ensures that the 3-phase electrical power is not distorted during its transmission along the umbilical. Asymmetric loading (voltage asymmetry) is thus avoided.

Referring to figure 4, an alternative arrangement of the power cables **12** in an umbilical **10** in accordance with the first embodiment of the invention is shown.

As in the earlier described embodiment, the umbilical comprises six power cables **12** bundled together to form two power cable triads **18**. The arrangement of figure 4 differs from that of figure 3 in that the triads **18**, and hence the power cables **12**, are symmetrically arranged within the umbilical **10**.

The triads **18** are preferably arranged symmetrically in the umbilical cross-section. In the depicted arrangement, the triads **18** are arranged at regular angular intervals along an imaginary circle **20** centered on a main longitudinal axis **22** of the umbilical **10**.

This has the effect of further improving the ampacity and reduces the interferences.

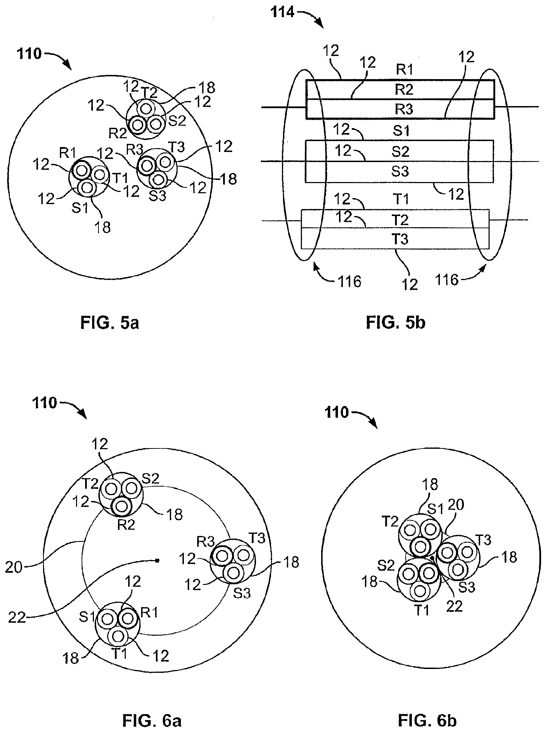

Referring to figure 5, a second embodiment of an umbilical **110** in accordance with the invention is shown depicting the arrangement of the power cables **12** therein. Only the power cables **12** are shown for clarity. The umbilical **110** is in the form of a subsea power umbilical.

The reference numerals for similar features of the second embodiment to those of the first embodiment have been increased by 100 for convenience, while the same reference numerals have been used for identical features. For example, the terminations which were indicated by the reference numeral 16 in the first embodiment are now indicated by the reference numeral 116.

The second embodiment differs from the first embodiment in that the first independent 3-phase power supply circuit **114** comprises at nine power cables **12** and each phase **R, S, T** of the 3-phase power supply circuit consists of three power cables **12** connected in parallel with each other as shown in figure 5b.

The power cables **12** are shown connected in parallel within the terminations **116** of the umbilical **110**.

The power cables **12** are bundled together in triplex formation for power distribution to form power cable triads **18** as shown in figure 5a. The nine power cables **12** produce three power cable triads **18**. The first power cable triad **18** comprises three phases **R1, S1, T1**, the second power cable triad **18** comprises three phases **R2, S2, T2**, and the third power cable triad 18 comprises three phases **R3, S3, T3**.

Each power cable triad **18** consists of three insulated power cables **12** twisted together.

Referring to figures 6a and 6b, alternative arrangements of the power cables **12** in an umbilical **110** in accordance with the second embodiment of the invention are shown.

As in the earlier described embodiment, the umbilical **110** comprises nine power cables **12** bundled together to form two power cable triads **18**. The arrangements of figures 6a and 6b differ from that of figure 5 in that the triads **18**, and hence the power cables **12**, are symmetrically arranged within the umbilical **110**.

The triads **18** are arranged symmetrically in the umbilical cross-section at regular angular intervals along first and second imaginary circles **20** having different radii in figures 6a and 6b respectively, and each centered on a main longitudinal axis **22** of the umbilical **110**.

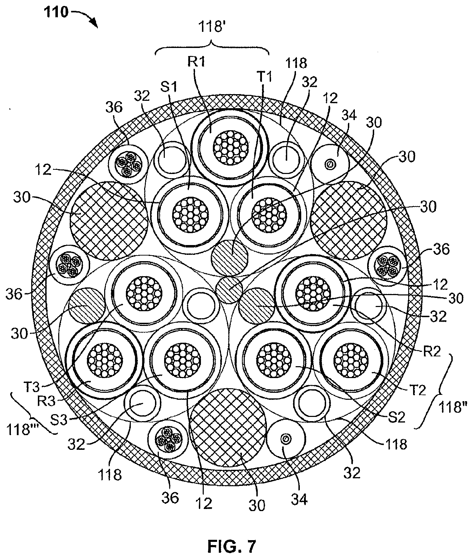

Referring to figure 7, a cross-sectional view of the umbilical **110** in accordance with the second embodiment of the invention is shown indicating an exemplary arrangement of the power cable triads now labelled **118** relative to other umbilical elements of the umbilical **110**.

The first, second and third triads **118** are indicated by reference numerals **118'**, **118"** and **118"'** for clarity.

The three triads **118'**, **118"** and **118"'** are preferably identical, which means that the nine power cables 12 are also preferably identical and assembled together

In addition to the power cables **12** arranged in triads, the umbilical also comprises a plurality of polymer fillers **30**, thermoplastic hoses or steel tubes **32**, optical fibre cables **34** and signal cables **36**.

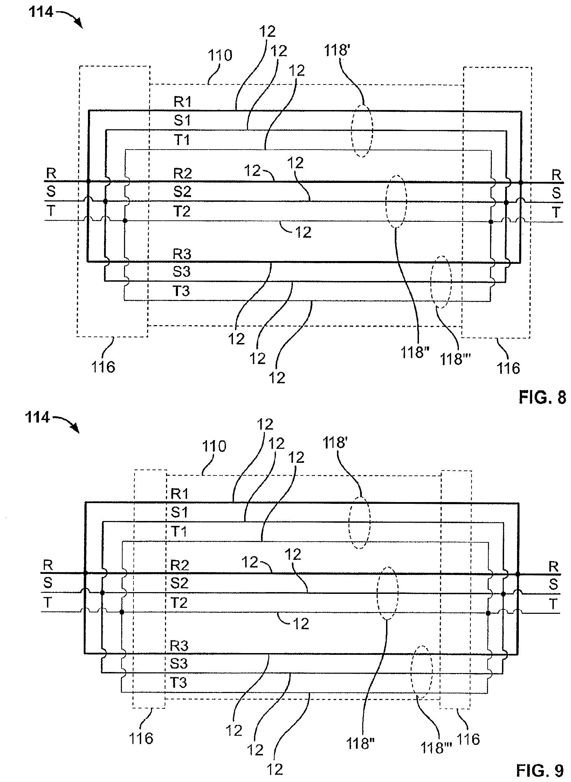

Figures 8 and 9 depict the power supply circuit diagram of the umbilical **110** of figure 7 showing two possible connections of power cables **12** in the circuit. Figure 8 depicts the connection of power cables **12** within the terminations **116** of the umbilical **110**, while figure 9, not according to the invention, depicts the connection of the power cables outside the terminations of the umbilical **110**.

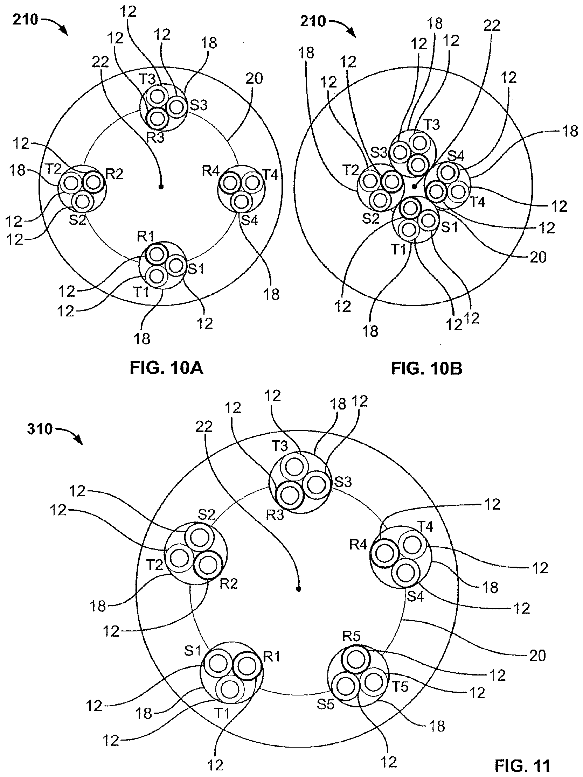

Referring to figures 10A and 10B, arrangements of the power cables **12** in an umbilical **210** in accordance with a third embodiment of the invention are shown.

The umbilical **210** comprises twelve power cables **12** forming a single independent 3-phase power supply circuit.

In the arrangements shown, the power cables **12** are bundled together to form power cable triads **18**, in this case four power cable triads.

The triads **18**, and hence the power cables **12**, are shown symmetrically arranged within the umbilical **210** at regular angular intervals along first and second imaginary circles **20** having different radii in figures 10A and 10B respectively, and each centered on a main longitudinal axis **22** of the umbilical **210**.

It would be understood that the power cables **12** are not required to be symmetrically arranged within the umbilical **210**.

Referring to figure 11, an arrangement of the power cables **12** in an umbilical **310** in accordance with a fourth embodiment of the invention is shown.

The umbilical **310** comprises fifteen power cables **12** forming a single independent 3-phase power supply circuit.

In the arrangements shown, the power cables **12** are bundled together to form power cable triads **18**, in this case five power cable triads **18**.

The triads **18**, and hence the power cables **12**, are shown symmetrically arranged within the umbilical **310** at regular angular intervals along an imaginary circle **20** centered on a main longitudinal axis **22** of the umbilical **310**.

It would be understood that the power cables **12** are not required to be symmetrically arranged within the umbilical **310**.

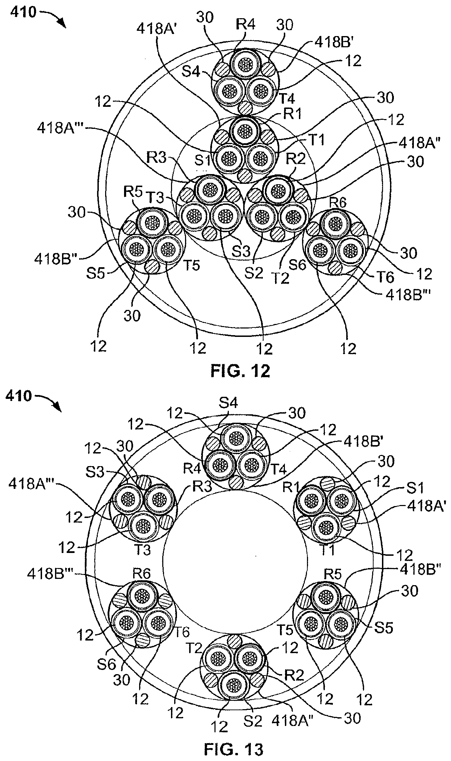

Referring to figure 12, a cross-sectional view of an umbilical **410** in accordance with a fifth embodiment of the invention is shown. Only the triads **418** are shown for clarity.

The reference numerals for similar features of the fifth embodiment to those of the second embodiment have been increased by 300 for convenience, while the same reference numerals have been used for identical features. For example, the power cable triads which were indicated by the reference numeral 118 in the second embodiment are now indicated by the reference numeral 418.

It would be understood that while the power cable triads **418** are shown with power cables **12** and polymer fillers **30**, one or more of the polymer fillers **30** may be replaced by a thermoplastic hose, steel tube or other component.

The fifth embodiment differs from the earlier described embodiments in that rather having a single independent 3-phase power supply circuit, the umbilical **410** comprises two independent 3-phase power supply circuits.

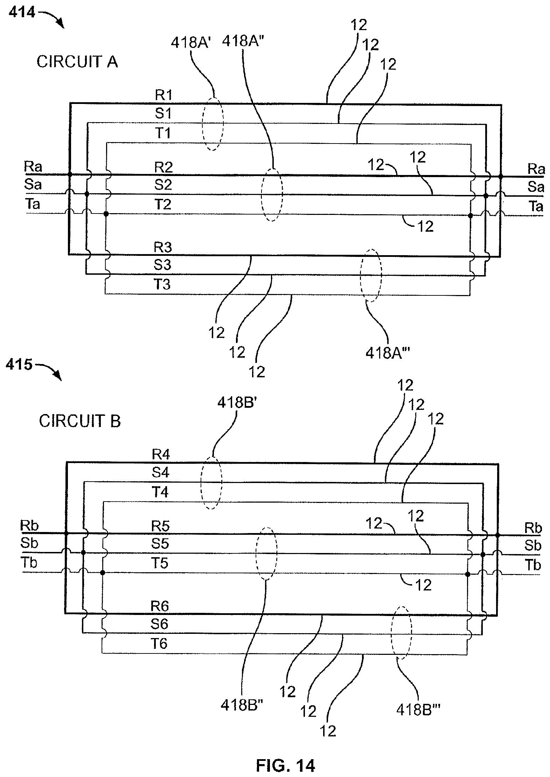

In the arrangement shown in figure 12, a first independent 3-phase power supply circuit (**414** shown in figure 14 and described hereinafter) is similar to that described above in relation to the second embodiment of the invention, and comprises nine power cables **12** bundled to form three triads 418A', 418A", 418A'" It would be understood that the first independent 3-phase power supply circuit may instead be similar to that described above in relation the first, third or fourth embodiments.

A second independent 3-phase power supply circuit (**415** shown in figure 14 and described hereinafter), is similar to that of the first independent 3-phase power supply circuit **414**, and comprises at least six power cables **12** wherein each phase of the second 3-phase power supply circuit **415** consists of at least two power cables **12** connected in parallel with each other.

In the arrangement shown in figure 12, the second independent 3-phase power supply circuit **415** is similar to that described above in relation to the second embodiments, and comprises nine power cables 12 bundled to form three triads 418B', 418B", 418B'". It would be understood that the second independent 3-phase power supply circuit may instead be similar to that described above in relation to the first, third or fourth embodiments.

Also, whilst the first and second 3-phase power supply circuits **414, 415** are shown as both having nine power cables **12**, they are not limited to having the same number of power cables **12.** Furthermore, the cables **12** of the first and second 3-phase power circuits **414, 415** may not be identical. For example, the first 3-phase power circuit **414** may comprise nine cables of cross-section 50mm$^2$ each, and the second 3-phase power circuit **415** may comprise six cables of cross-section 90mm$^2$ each.

In Figure 12, the triads **418** are depicted arranged symmetrically in the umbilical cross-section at regular angular intervals along two different imaginary circles centered on a main longitudinal axis (not shown) of the umbilical **410.**

The first and second independent 3-phase power supply circuits **414, 415** are arranged so as to define an inner circuit or 'Circuit A' shown in the top or first part of figure 14, and an outer circuit or 'Circuit B', shown in the bottom or second part of figure 14, respectively within the umbilical **410**. The inner and outer circuits may be contra-helically laid. Alternatively, the inner and outer circuits may be helically laid in the same direction , but with different helix angles.

The first, second and third triads **418** of the first 3-phase power supply circuit are indicated by reference numerals **418A', 418A"** and **418A'"** for clarity. Similarly, the first, second and third triads **418** of the second 3-phase power supply circuit are indicated by reference numerals **418B', 418B"** and **418B'"** for clarity.

Referring to figure 13, an alternative arrangement of the triads **418** in an umbilical **410** in accordance with the fifth embodiment of the invention is shown.

The arrangement differs from that of figure 12 in that the first and second independent 3-phase power supply circuits **414, 415** are not arranged to define an inner circuit and an outer circuit within the umbilical **410,** but spaced at regular intervals around a single imaginary circle (not shown).

Figure 14 depicts the power supply circuit diagram of the umbilical **410** in accordance with the fifth embodiment of the invention. As in the earlier described embodiments, the power cables **12** may be connected in parallel within one of the terminations of the umbilical **410,** within both terminations of the umbilical **410** or outside the terminations of the umbilical **410.** The first independent 3-phase power supply circuit **414** comprises the first triads **418A', 418A"** and **418A'",** and the second independent 3-phase power supply circuit **415** comprises the triads **418B', 418B"** and **418B'".**

In accordance with a sixth embodiment (not shown), the umbilical comprises three or more independent 3-phase power supply circuits. Each independent power supply circuit may comprise at least six power cables wherein each phase of the 3-phase power supply circuit consists of at least two power cables connected in parallel with each other.

The arrangement of the power cables forming each independent 3-phase power supply circuits may be in accordance with the first, second, third or fourth embodiments described earlier.

In addition, the independent 3-phase power supply circuits may be arranged so as to define an outer circuit and an inner circuit within the umbilical; an outer circuit, a middle circuit and an inner circuit within the umbilical or other suitable arrangement. The present invention can be easily implemented with the existing manufacturing technology.

The invention is defined by the appendant claims and is not restricted to the details of any foregoing embodiments.

## Claims

1. A subsea power umbilical (10, 110, 210, 310, 410) comprising a first independent 3-phase power supply circuit (14, 114, 414) comprising three insulated power cables (12) rated at voltages between 1kV and 200 kV bundled together in a triplex formation for power distribution and twisted together to form a power cable triad (18,118, 418), and at least one termination (16, 116), **characterized in that** said first 3-phase power supply circuit (14, 114, 414) comprises at least six power cables (12), each phase (R, S, T) of said 3-phase power supply circuit (14, 114, 414) consisting of at least two power cables (12) connected in parallel with each other, said power cables (12) being connected in parallel in the at least one termination (16, 116) of the subsea power umbilical.

2. An umbilical (10, 110, 210, 310, 410) according to claim 1, wherein the umbilical (10, 110, 210, 310, 410) further comprises a second independent 3-phase power supply circuit (415).

3. An umbilical (10, 110, 210, 310, 410) according to claim 2, wherein the second 3-phase power supply circuit (415) comprises at least six power cables (12) wherein each phase (R, S, T) of the second 3-phase power supply circuit (415) consists of at least two power cables (12) connected in parallel with each other.

4. An umbilical (10, 110, 210, 310, 410) according to anyone of the preceding claims, wherein the umbilical (10, 110, 210, 310, 410) comprises three or more independent 3-phase power supply circuits (14, 114, 414, 415).

5. An umbilical (10, 110, 210, 310, 410) according to claim 4, wherein each independent power supply circuit (14, 114, 414, 415) comprises at least six power cables (12) wherein each phase (R, S, T) of the 3-phase power supply circuit (14, 114, 414, 415) consists of at least two power cables (12) connected in parallel with each other.

6. An umbilical (10, 110, 210, 310, 410) according to anyone of the preceding claims, wherein all of the power cables (12) are bundled together in triplex formation for power distribution to form power cable triads (18, 118, 418).

7. An umbilical (10, 110, 210, 310, 410) according to anyone of the preceding claims, wherein the umbilical (10, 110, 210, 310, 410) comprises at least three power cable triads (18, 118, 418) defining the first independent power supply circuit (14, 114, 414).

8. An umbilical (10, 110, 210, 310, 410) according to anyone of the preceding claims, wherein the or each independent power supply circuit (14, 114, 414, 415) comprises at least three power cable triads (18, 118, 418).

9. An umbilical (10, 110, 210, 310, 410) according to anyone of the preceding claims, wherein each triad (18, 118, 418) consists of 3 insulated power cables (12) twisted together.

10. An umbilical (10, 110, 210, 310, 410) according to claim 6 or any claim dependent directly or indirectly on claim 6, wherein the triads (18, 118, 418) are symmetrically arranged within the umbilical (10, 110, 210, 310, 410).

11. An umbilical (10, 110, 210, 310, 410) according to claim 10, wherein the triads (18, 118, 418) are arranged symmetrically in the umbilical cross-section.

12. An umbilical (10, 110, 210, 310, 410) according to claim 10 or claim 11, wherein the triads (18, 118, 418) defining at least one independent power supply circuit (14, 114, 414, 415) are arranged at regular angular intervals along an imaginary circle centered on a main longitudinal axis of the umbilical (10, 110, 210, 310, 410), and preferably wherein the triads (18, 118, 418) defining each independent power supply circuit (14, 114, 414, 415) are arranged at regular angular intervals along an imaginary circle centered on a main longitudinal axis of the umbilical (10, 110, 210, 310, 410).

13. An umbilical (10, 110, 210, 310, 410) according to claim 2 or any claim directly or indirectly dependent on claim 2, wherein the first and second independent power circuits (14, 114, 414, 415) are arranged to as to define an outer circuit and an inner circuit within the umbilical (10, 110, 210, 310, 410).

14. An umbilical (10, 110, 210, 310, 410) according to claim 13, wherein the outer circuit and the inner circuit are contra-helically laid.

15. An umbilical (10, 110, 210, 310, 410) according to anyone of the preceding claims, wherein the power cables (12) are connected in parallel in both terminations (16, 116) of the umbilical (10, 110, 210, 310, 410).

**Patentansprüche**

1. Ein Unterwasserstromversorgungskabel (10, 110, 210, 310, 410), beinhaltend einen ersten unabhängigen 3-Phasen-Stromversorgungskreis (14, 114, 414), beinhaltend drei für Spannungen zwischen 1 kV und 200 kV ausgelegte isolierte Stromkabel (12), die in einer Triplex-Formation zur Stromverteilung zusammengebündelt und miteinander verdrillt sind, um eine Stromkabel-Triade (18, 118, 418) zu bilden, und mindestens einen Anschluss (16, 116), **dadurch gekennzeichnet, dass** der erste 3-Phasen-Stromversorgungskreis (14, 114, 414) mindestens sechs Stromkabel (12) beinhaltet, wobei jede Phase (R, S, T) des 3-Phasen-Stromversorgungskreises (14, 114, 414) aus mindestens zwei parallel geschalteten Stromkabeln (12) besteht, wobei die Stromkabel (12) in dem mindestens einen Anschluss (16, 116) des Unterwasserstromversorgungskabels parallel geschaltet sind.

2. Versorgungskabel (10, 110, 210, 310, 410) gemäß Anspruch 1, wobei das Versorgungskabel (10, 110, 210, 310, 410) ferner einen zweiten unabhängigen 3-Phasen-Stromversorgungskreis (415) beinhaltet.

3. Versorgungskabel (10, 110, 210, 310, 410) gemäß Anspruch 2, wobei der zweite 3-Phasen-Stromversorgungskreis (415) mindestens sechs Stromkabel (12) beinhaltet, wobei jede Phase (R, S, T) des zweiten 3-Phasen-Stromversorgungskreises (415) aus mindestens zwei parallel geschalteten Stromkabeln (12) besteht.

4. Versorgungskabel (10, 110, 210, 310, 410) gemäß einem der vorhergehenden Ansprüche, wobei das Versorgungskabel (10, 110, 210, 310, 410) drei oder mehr unabhängige 3-Phasen-Stromversorgungskreise (14, 114, 414, 415) beinhaltet.

5. Versorgungskabel (10, 110, 210, 310, 410) gemäß Anspruch 4, wobei jeder unabhängige Stromversorgungskreis (14, 114, 414, 415) mindestens sechs Stromkabel (12) beinhaltet, wobei jede Phase (R, S, T) des 3-Phasen-Stromversorgungskreises (14, 114, 414, 415) aus mindestens zwei parallel geschalteten Stromkabeln (12) besteht.

6. Versorgungskabel (10, 110, 210, 310, 410) gemäß einem der vorhergehenden Ansprüche, wobei alle der Stromkabel (12) in einer Triplex-Formation zur Stromverteilung zusammengebündelt sind, um Stromkabel-Triaden (18, 118, 418) zu bilden.

7. Versorgungskabel (10, 110, 210, 310, 410) gemäß einem der vorhergehenden Ansprüche, wobei das Versorgungskabel (10, 110, 210, 310, 410) mindestens drei Stromkabel-Triaden (18, 118, 418) beinhaltet, welche den ersten unabhängigen Stromversorgungskreis (14, 114, 414) definieren.

8. Versorgungskabel (10, 110, 210, 310, 410) gemäß einem der vorhergehenden Ansprüche, wobei der oder jeder unabhängige Stromversorgungskreis (14, 114, 414, 415) mindestens drei Stromkabel-Triaden (18, 118, 418) beinhaltet.

9. Versorgungskabel (10, 110, 210, 310, 410) gemäß einem der vorhergehenden Ansprüche, wobei jede Triade (18, 118, 418) aus 3 isolierten Stromkabeln (12) besteht, die miteinander verdrillt sind.

10. Versorgungskabel (10, 110, 210, 310, 410) gemäß Anspruch 6 oder einem von Anspruch 6 direkt oder indirekt abhängigen Anspruch, wobei die Triaden (18, 118, 418) innerhalb des Versorgungskabels (10, 110, 210, 310, 410) symmetrisch angeordnet sind.

11. Versorgungskabel (10, 110, 210, 310, 410) gemäß Anspruch 10, wobei die Triaden (18, 118, 418) im Versorgungskabelquerschnitt symmetrisch angeordnet sind.

12. Versorgungskabel (10, 110, 210, 310, 410) gemäß Anspruch 10 oder Anspruch 11, wobei die Triaden (18, 118, 418), die mindestens einen unabhängigen Stromversorgungskreis (14, 114, 414, 415) definieren, in regelmäßigen Winkelintervallen entlang eines gedachten Kreises angeordnet sind, der auf einer Hauptlängsachse des Versorgungskabels (10, 110, 210, 310, 410) zentriert ist, und wobei vorzugsweise die Triaden (18, 118, 418), die jeden unabhängigen Stromversorgungskreis (14, 114, 414, 415) definieren, in regelmäßigen Winkelintervallen entlang eines gedachten Kreises angeordnet sind, der auf einer Hauptlängsachse des Versorgungskabels (10, 110, 210, 310, 410) zentriert ist.

13. Versorgungskabel (10, 110, 210, 310, 410) gemäß Anspruch 2 oder einem von Anspruch 2 direkt oder indirekt abhängigen Anspruch, wobei der erste und der zweite unabhängige Stromkreis (14, 114, 414, 415) angeordnet sind, um einen äußeren Stromkreis und einen inneren Stromkreis innerhalb des Versorgungskabels (10, 110, 210, 310, 410) zu definieren.

14. Versorgungskabel (10, 110, 210, 310, 410) gemäß Anspruch 13, wobei der äußere Stromkreis und der innere Stromkreis gegenspiralig verlegt sind.

15. Versorgungskabel (10, 110, 210, 310, 410) gemäß einem der vorhergehenden Ansprüche, wobei die Stromkabel (12) in beiden Anschlüssen (16, 116) des Versorgungskabels (10, 110, 210, 310, 410) parallel geschaltet sind.

**Revendications**

1. Un ombilical de puissance sous-marin (10, 110, 210, 310, 410) comprenant un premier circuit d'alimentation en puissance triphasée indépendant (14, 114, 414) comprenant trois câbles de puissance isolés (12) assignés à des tensions comprises entre 1 kV et 200 kV rassemblés en un faisceau dans une formation triplex pour la distribution de puissance et torsadés les uns avec les autres afin de former une triade de câbles de puissance (18, 118, 418), et au moins une terminaison (16, 116),
**caractérisé en ce que** ledit premier circuit d'alimentation en puissance triphasée (14, 114, 414) comprend au moins six câbles de puissance (12), chaque phase (R, S, T) dudit circuit d'alimentation en puissance triphasée (14, 114, 414) consistant en au moins deux câbles de puissance (12) connectés en parallèle l'un avec l'autre, lesdits câbles de puissance (12) étant connectés en parallèle dans l'au moins une terminaison (16, 116) de l'ombilical de puissance sous-marin.

2. Un ombilical (10, 110, 210, 310, 410) selon la revendication 1, où l'ombilical (10, 110, 210, 310, 410) comprend en sus un deuxième circuit d'alimentation en puissance triphasée indépendant (415).

3. Un ombilical (10, 110, 210, 310, 410) selon la revendication 2, où le deuxième circuit d'alimentation en puissance triphasée (415) comprend au moins six câbles de puissance (12) où chaque phase (R, S, T) du deuxième circuit d'alimentation en puissance triphasée (415) consiste en au moins deux câbles de puissance (12) connectés en parallèle l'un avec l'autre.

4. Un ombilical (10, 110, 210, 310, 410) selon n'importe laquelle des revendications précédentes, où l'ombilical (10, 110, 210, 310, 410) comprend trois circuits d'alimentation en puissance triphasée indépendants (14, 114, 414, 415) ou plus.

5. Un ombilical (10, 110, 210, 310, 410) selon la revendication 4, où chaque circuit d'alimentation en puissance indépendant (14, 114, 414, 415) comprend au moins six câbles de puissance (12) où chaque phase (R, S, T) du circuit d'alimentation en puissance triphasée (14, 114, 414, 415) consiste en au moins deux câbles de puissance (12) connectés en parallèle l'un avec l'autre.

6. Un ombilical (10, 110, 210, 310, 410) selon n'importe laquelle des revendications précédentes, où l'ensemble des câbles de puissance (12) sont rassemblés en un faisceau dans une formation triplex pour la distribution de puissance afin de former des triades de câbles de puissance (18, 118, 418).

7. Un ombilical (10, 110, 210, 310, 410) selon n'importe laquelle des revendications précédentes, où l'ombilical (10, 110, 210, 310, 410) comprend au moins trois triades de câbles de puissance (18, 118, 418) définissant le premier circuit d'alimentation en puissance indépendant (14, 114, 414).

8. Un ombilical (10, 110, 210, 310, 410) selon n'importe laquelle des revendications précédentes, où le ou chaque circuit d'alimentation en puissance indépendant (14, 114, 414, 415) comprend au moins trois triades de câbles de puissance (18, 118, 418).

9. Un ombilical (10, 110, 210, 310, 410) selon n'importe laquelle des revendications précédentes, où chaque triade (18, 118, 418) consiste en 3 câbles de puissance isolés (12) torsadés les uns avec les autres.

10. Un ombilical (10, 110, 210, 310, 410) selon la revendication 6 ou n'importe quelle revendication dépendant directement ou indirectement de la revendication 6, où les triades (18, 118, 418) sont agencées de manière symétrique à l'intérieur de l'ombilical (10, 110, 210, 310, 410).

11. Un ombilical (10, 110, 210, 310, 410) selon la revendication 10, où les triades (18, 118, 418) sont agencées de manière symétrique dans la coupe transversale de l'ombilical.

12. Un ombilical (10, 110, 210, 310, 410) selon la revendication 10 ou la revendication 11, où les triades (18, 118, 418) définissant au moins un circuit d'alimentation en puissance indépendant (14, 114, 414, 415) sont agencées à intervalles angulaires réguliers le long d'un cercle imaginaire centré sur un axe longitudinal principal de l'ombilical (10, 110, 210, 310, 410), et préférablement où les triades (18, 118, 418) définissant chaque circuit d'alimentation en puissance indépendant (14, 114, 414, 415) sont agencées à intervalles angulaires réguliers le long d'un cercle imaginaire centré sur un axe longitudinal principal de l'ombilical (10, 110, 210, 310, 410).

13. Un ombilical (10, 110, 210, 310, 410) selon la revendication 2 ou n'importe quelle revendication dépendant directement ou indirectement de la revendication 2, où les premier et deuxième circuits de puissance indépendants (14, 114, 414, 415) sont agencés de manière à définir un circuit externe et un circuit interne à l'intérieur de l'ombilical (10, 110, 210, 310, 410).

14. Un ombilical (10, 110, 210, 310, 410) selon la revendication 13, où le circuit externe et le circuit interne sont disposés de manière contre-hélicoïdale.

15. Un ombilical (10, 110, 210, 310, 410) selon n'importe laquelle des revendications précédentes, où les câbles de puissance (12) sont connectés en parallèle dans les deux terminaisons (16, 116) de l'ombilical (10, 110, 210, 310, 410).

FIG. 1

FIG. 2

FIG. 3A          FIG. 3B

FIG. 4

FIG. 5a

FIG. 5b

FIG. 6a

FIG. 6b

FIG. 7

FIG. 8

FIG. 9

**FIG. 10A**

**FIG. 10B**

**FIG. 11**

16

FIG. 12

FIG. 13

**FIG. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 669122 C
- US 6472614 B
- WO 9317176 A
- GB 2316990 A
- WO 2005124213 A
- GB 2462130 A